# EUROPÄISCHE PATENTANMELDUNG

(11) **EP 0 597 350 A1**
(43) Veröffentlichungstag der Anmeldung: **18.05.1994**
(21) Anmeldenummer: 93117708.3
(22) Anmeldetag: 02.11.1993
(51) Int. Cl.: B62D 55/112, B62D 55/30

(54) **Zugmittellaufwerk**

(30) Priorität: 13.11.1992 US 976090
(71) Anmelder: DEERE & COMPANY, Moline, Illinois 61265 (US)
(72) Erfinder: Isaakson, Charles David, Colona, Illinois 61241 (US); Killen, Dale H., Green Rock, Illinois 61241 (US); Nagorcka, James Arthur, Tarrington, Victoria 3301 (AU)
(74) Vertreter: Feldmann, Bernhard

(57) **Zusammenfassung**

Ein Zugmittellaufwerk (18) eines Fahrzeugs (10), z. B. einer Erntemaschine enthält zwei Umlenkräder (22, 24), die jeweils über Schwenkarme (32, 38) nachgiebig an einem Rahmen (30) des Fahrzeugs (10) gelagert sind und entgegen einer Kraft in Aufhängungszylindern (64, 66) in eine dem Boden abgelegene Stellung gelangen können, in der das Zugmittel (26) einem Hindernis ausweichen kann. Die Aufhängungszylinder (64, 66) sind untereinander funktionsmäßig verbunden.

## Beschreibung

Die Erfindung betrifft ein Zugmittellaufwerk eines Fahrzeugs mit einem Antriebsrad und zwei Umlenkrädern, die von einem endlosen Zugmittel umgeben sind, mittels dessen sich das Fahrzeug über einen Rahmen auf dem Boden abstützt, und mit einem schwenkbar an den Rahmen angeschlossenen Schwenkarm zur drehbaren Aufnahme eines Umlenkrades.

Die US-A-4,373,758 zeigt ein Gleiskettenfahrzeug mit einer Kette, die um ein hochgesetztes Antriebsrad, ein vorderes Umlenkrad und ein rückwärtiges Umlenkrad geschlungen ist. Zwischen beiden Umlenkrädern sind Druckrollen vorgesehen, mit deren Hilfe sich der Rahmen des Fahrzeugs über die Kette auf dem Boden abstützt. Sowohl die Druckrollen als auch das rückwärtige Umlenkrad sind jeweils an den Enden zweiarmiger Schwenkhebel drehbar aufgenommen und somit fähig, beim Auftreffen auf ein Hindernis einerseits auszuweichen, andererseits aber die Kette gespannt zu halten. Zwei der Schwenkhebel sind sich jeweils derart überlappend angeordnet, daß das Schwenken des einen Schwenkhebels sich auch auf die Stellung des anderen Schwenkhebels auswirkt. Zwischen den beiden Schwenkhebeln ist ein Spannelement, z. B. in der Art eines Gummipuffers eingespannt, das zur Dämpfung von Stößen vorgesehen ist.

Die Gleiskettenanordnung nach dieser Schrift ist insofern nachteilig, als die Spannung der Kette nicht in allen Fällen beim Überfahren eines Hindernisses oder unebenen Geländes eingehalten wird und das Befahren einer Straße mit relativ hoher Geschwindigkeit nicht möglich ist.

Die US-A-4,519,654 zeigt ein Gleiskettenfahrzeug mit einem Antriebsrad und lediglich einem Umlenkrad, die in jeweils gleichem Abstand zum Boden gelagert sind. Zwischen den beiden Rädern sind vier ebenfalls in Schwenkhebeln gelagerte Druckrollen drehbar gelagert, wobei die Schwenkhebel einarmig ausgebildet und endseitig schwenkbar an dem Rahmen des Fahrzeugs gelagert sind. Beide Schwenkhebel übertragen ihre Schwenkbewegung mittels einer übergeordneten Wippe auf den jeweils anderen Schwenkhebel.

Diesem Gleiskettenfahrzeug haften ebenfalls die zuvor geschilderten Nachteile an.

Die der Erfindung zugrunde liegende Aufgabe wird darin gesehen, ein Zugmittellaufwerk vorzuschlagen, das ausreichend nachgiebig ist, um das Fahrzeug auch mit relativ hoher Geschwindigkeit insbesondere für den Transport betreiben zu können.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise können nun beide Umlenkräder beim Auftreffen auf Bodenunebenheiten oder Hindernisse nachgeben und die als Stoßdämpfer wirkenden Aufhängungszylinder zu einer nachgiebigen Aufhängung des Fahrzeugs führen, die für diese Art von Fahrzeugen hohe Fahrtgeschwindigkeiten zuläßt.

Die Verwendung einer oder mehrerer weiterer Schwenkarme mit Zugmittelrollen, über die sich das Zugmittel und somit das Fahrzeug auf dem Boden abstützt, entlastet ein ansonsten über eine weite Strecke frei gespanntes Trum des Zugmittels.

Insbesondere dann, wenn diese weiteren Schwenkarme ebenfalls über Aufhängungszylinder nachgiebig an dem Rahmen oder einem anderen Schwenkarm angelenkt sind, ergibt sich eine federnde Aufhängung auch im Bereich zwischen den beiden Umlenkrädern, in dem ebenfalls beim Überfahren eines Hindernisses das Zugmittel ausgelenkt wird.

Wenn alle oder jedenfalls die meisten Aufhängungszylinder untereinander derart verbunden sind, daß aus einem ausgepreßtes Druckmittel einem anderen zugeführt und dieser somit entweder ausgefahren oder gespannt wird, ergibt sich eine insgesamt nachgiebige und zum Ausweichen fähige Lagerung des Zugmittels, so daß beim Überfahren eines Hindernisses das Zugmittel auslenken kann, ohne überspannt zu werden, andererseits aber auch im übrigen Bereich ausreichend gespannt bleibt.

Wird in den Druckmittelkreis zusätzlich ein Druckspeicher eingefügt, können auch Lastspitzen beim gleichzeitigen Beaufschlagen aller Aufhängungszylinder vermieden bzw. gedämpft werden.

Eine hohe Spannung des Zugmittels ist im Arbeitsbetrieb des Fahrzeugs erforderlich, weil dann unregelmäßig auftretende Kräfte, die auch seitwärts gerichtet sein können, den geraden und formschlüssigen Lauf des Zugmittels auf dem Antriebsrad zu beeinflussen drohen. Zur Vermeidung unnötigen Abriebs an dem Zugmittel ist daher ein Niederspannungszustand vorgesehen, in dem die Spannkraft des Spannmotors durch das Anlegen einer Gegenkraft herabgesetzt wird. Bei der Fahrt auf Straßen führt die Verringerung der hohen Spannung zur Reduktion des Verschleißes an dem Zugmittel.

Der Vorteil der Wahl zwischen einem Hochspannungs- und einem Niederspannungszustand des Zugmittels kommt direkt zum Tragen, wenn eine Steuerung oder Regelung vorgesehen ist, die abhängig von der Fahrtgeschwindigkeit, insbesondere abgeleitet von dem gewählten Gang im Getriebe, die Spannung des Zugmittels verändert.

In der Zeichnung ist ein nachfolgend näher beschriebenes Ausführungsbeispiel der Erfindung dargestellt. Es zeigt:
Fig. 1 ein Fahrzeug in Seitenansicht mit einem Zugmittellaufwerk,
Fig. 2 das Zugmittellaufwerk in Seitenansicht,
Fig. 3 einen Hydraulikschaltkreis in schematischer Darstellung zum Steuern der Aufhängung und der Spannung des Zugmittellaufwerks,
Fig. 4 ein Diagramm mit Angabe der Fahrtgeschwindigkeit des Fahrzeugs und des angelegten Drucks zum Spannen des Zugmittellaufwerks und
Fig. 5 - 9 das Zugmittellaufwerk in verschiedenen Situationen beim Überfahren eines Hindernisses.

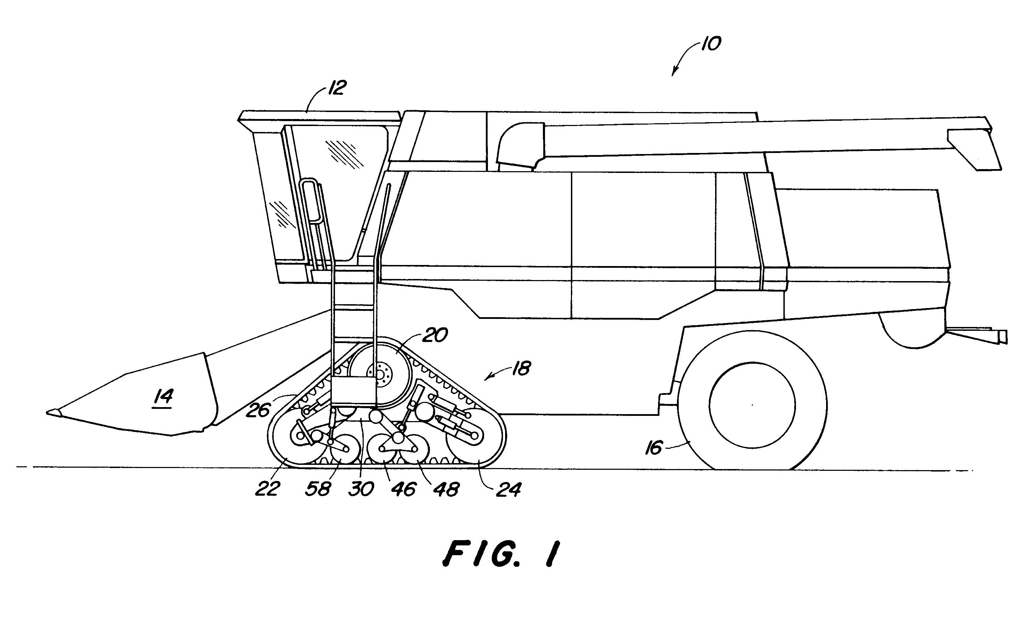

Ein in Figur 1 in Seitenansicht gezeigtes Fahrzeug 10 in der Art eines selbstfahrenden Mähdreschers ist versehen mit einer Fahrerkabine 12, einer Erntevorrichtung 14, rückwärtigen lenkbaren Rädern 16 und einem Zugmittellaufwerk 18. Die vorliegende Erfindung wird ausgehend davon beschrieben, daß es sich um ein Zugmittellaufwerk 18 zum Antrieb eines Mähdreschers oder einer anderen Erntemaschine handelt, wozu es entsprechend ausgebildet bzw. angepaßt ist. Jedoch kann diese Erfindung auch an Zugmittellaufwerken bei anderen Fahrzeugen, z. B. Traktoren, Baumaschinen, Lastwagen und dergleichen verwendet werden. Bei dem Ausführungsbeispiel handelt es sich außerdem um ein sogenanntes halbes Zugmittellaufwerk 18, weil dieses nur einen Teil des Fahrzeugs 10 trägt, während sich der andere Teil des Fahrzeugs 10 über Räder auf dem Boden abstützt. Die Erfindung ist aber auch analog an einem ganzen Zugmittellaufwerk anwendbar.

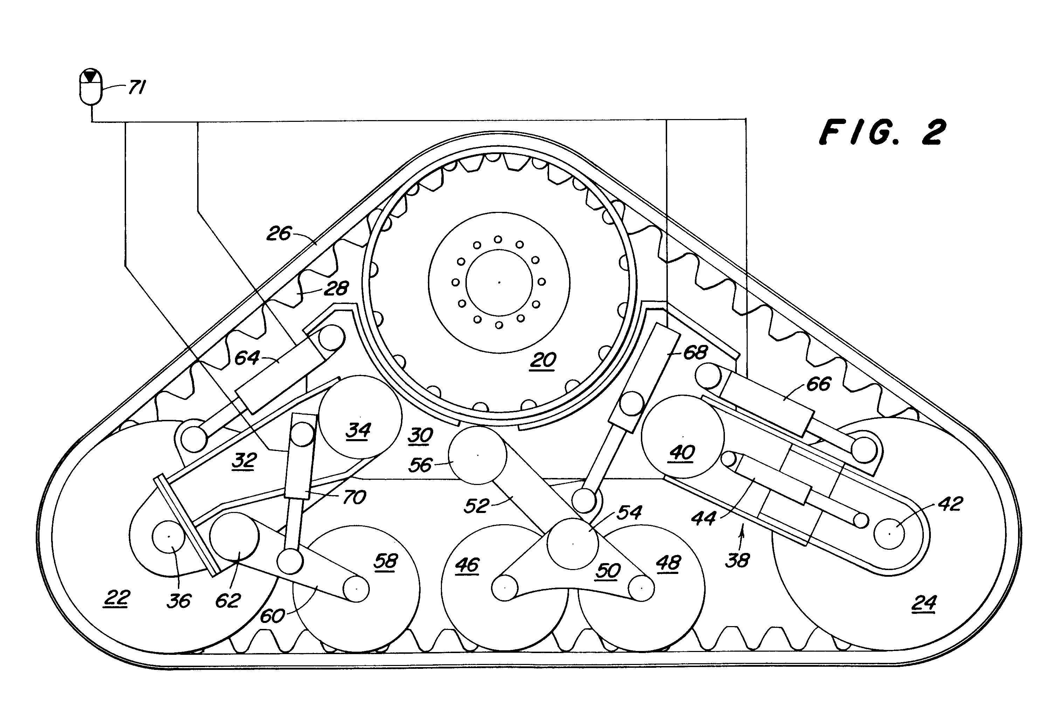

Das Zugmittellaufwerk 18 ist am besten in Figur 2 gezeigt und weist danach ein Antriebsrad 20, ein vorderes Umlenkrad 22 und ein rückwärtiges Umlenkrad 24 auf. Ein Zugmittel 26 umgibt die Umlenkräder 22, 24 und das Antriebsrad 20. In das Zugmittel 26 sind zentrierende Führungsaussparungen eingearbeitet, in die das Antriebsrad 20 eingreift, um das Zugmittel 26 und somit das Fahrzeug 10 anzutreiben. Im vorliegenden Ausführungsbeispiel ist das endloses Zugmittel 26 aus einem Gummiband gebildet, das bei der Fahrt auf Straßen keine Spuren hinterläßt. Die Anwendung der Erfindung ist jedoch auch bei einer Gleiskette aus Stahl möglich.

Ein starrer Rahmen 30 ist an ein Achsgehäuse des Fahrzeugs 10 angeschraubt und dient dazu, das Spann- und Aufhängungssystem des Zugmittellaufwerks 18 zu tragen. Das vordere Umlenkrad 22 ist mittels eines vorderen Schwenkarms 32 schwenkbar an den starren Rahmen 30 angeschlossen. Ein Ende des vorderen Schwenkarms 32 ist in einem vorderen Lager 34 schwenkbar an den starren Rahmen 30 angeschlossen. An dem anderen Ende des vorderen Schwenkarms 32 ist das vordere Umlenkrad 22 angebracht, dessen Mitte eine vordere Umlenkachse 36 definiert.

Das rückwärtige Umlenkrad 24 ist mittels eines rückwärtigen Schwenkarms 38 schwenkbar auf den starren Rahmen 30 aufgesetzt. Ein Ende des rückwärtigen Schwenkarms 38 ist mittels eines rückwärtigen Lagers 40 schwenkbar an den starren Rahmen 30 angeschlossen. Das rückwärtige Umlenkrad 24 ist drehbar an dem anderen Ende des rückwärtigen Schwenkarms 38 aufgenommen und umgibt konzentrisch eine rückwärtige Umlenkachse 42. Der rückwärtige Schwenkarm 38 ist als ein Teleskoparm ausgebildet und mit einem Spannmotor 44 in der Art eines hydraulischen Zylinder-Kolbenzusammenbaus versehen, der im weiteren detailliert beschrieben wird. Im übrigen kann der Spannmotor 44 auch mit einer nicht gezeigten Rückholfeder versehen werden.

Zugmittelrollen 46 und 48 sind drehbar in einem Zugmittelrollenträger 50 gelagert, der mittels eines Lagers 54 schwenkbar mit einem weiteren Schwenkarm 52, nämlich einem Zwischen-Schwenkarm verbunden ist. Das andere Ende dieses Schwenkarms 52 ist mittels eines Zwischengelenks 56 schwenkbar an den starren Rahmen 30 angebracht.

Eine dritte Zugmittelrolle 58 ist drehbar von einem Ende eines weiteren Schwenkarms 60, eines sogenannten Zusatzschwenkarms aufgenommen. Das andere, d. h. das der dritten Zugmittelrolle 58 gegenüberliegende Ende dieses weiteren Schwenkarms 60 ist über ein Lager 62 schwenkbar auf den vorderen Schwenkarm 32 aufgesetzt.

Die Aufhängung des Zugmittellaufwerks 18 enthält vier linear wirkende Hydraulik- oder gar Pneumatikmotoren, die als front- oder heckseitige, dazwischengelagerte oder zusätzliche Aufhängungszylinder 64, 66, 68 und 70 bezeichnet werden. Alle Aufhängungszylinder 64 - 70 sind untereinander und mit einem Druckspeicher 71 hydraulisch verbunden. Der frontseitige Aufhängungszylinder 64 ist mit dem starren Rahmen 30 und dem vorderen Schwenkarm 32 gelenkig verbunden und drückt letzteren nach unten. In gleicher Weise ist der heckseitige Aufhängungszylinder 66 an den starren Rahmen 30 und den rückwärtigen Schwenkarm 38 angeschlossen, um diesen nach unten vorzuspannen. Der dazwischen gelagerte Aufhängungszylinder 68 ist zwischen den starren Rahmen 30 und den weiteren Schwenkarm 52, den Zwischenschwenkarm, eingesetzt, um diesen nach unten zu drücken. Schließlich ist der zusätzliche Aufhängungszylinder 70 sowohl an den vorderen Schwenkarm 32 als auch an den zusätzlichen, weiteren Schwenkarm 60 angeschlossen, um diesen Schwenkarm 60 nach unten, d. h. auf den Boden, zu drücken.

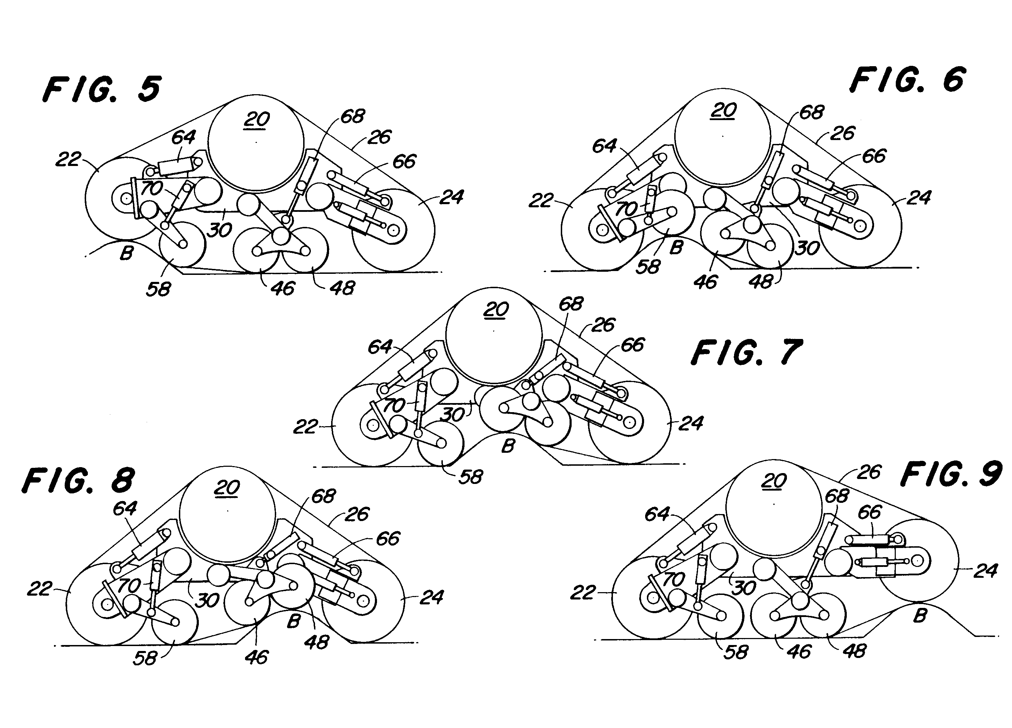

All diese Aufhängungszylinder 64 - 70 dienen als Stoßdämpfer, um die auf den starren Rahmen 30 einwirkenden Lasten zu dämpfen. Man kann in den Figuren 5 bis 9 erkennen, wie ausgehend von Figur 5 beim Auftreffen des vorderen Umlenkrads 22 auf ein auf dem Boden liegendes Hindernis -B-der frontseitige Aufhängungszylinder 64 eingefahren wird, worauf die aus diesem verdrängte Hydraulikflüssigkeit dem Druckspeicher 71 zufließt. Wenn das Fahrzeug 10 gemäß Figur 6 über das Hindernis -B- fährt, schiebt sich der zusätzliche Aufhängungszylinder 70 zusammen, während der frontseitige Aufhängungszylinder 64 ausfährt. Ein Großteil der aus dem zusammengeschobenen zusätzlichen Aufhängungszylinder 70 verdrängten Hydraulikflüssigkeit fließt dabei dem ausfahrenden frontseitigen Aufhängungszylinder 64 zu. Diese Vorgänge wiederholen sich in analoger Weise beim Einfahren des dazwischen gelagerten Aufhängungszylinders 68 in Figur 7 und beim Einfahren des heckseitigen Aufhängungszylinders 66 in Figur 9.

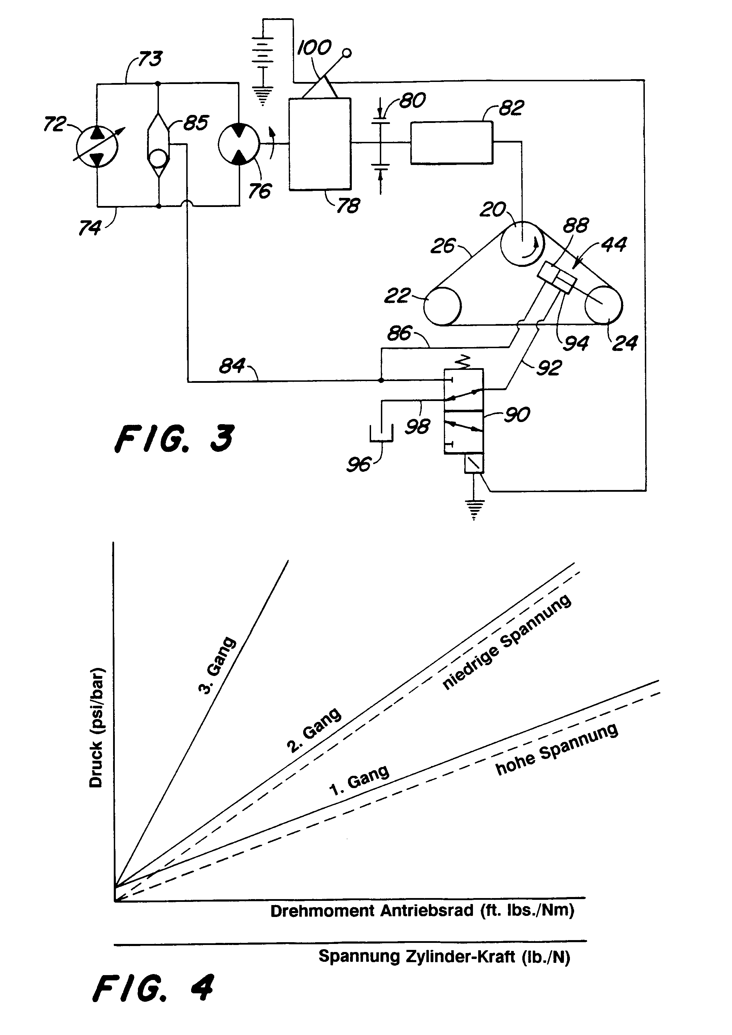

Das Fortbewegungssystem des Zugmittellaufwerks 18 ist schematisch und im Prinzip in Figur 3 dargestellt und enthält danach eine hydrostatische Pumpe 72, die durch Leitungen 73 und 74 Flüssigkeit einem Hydraulikmotor 76 zuführt. Der Hydraulikmotor 76 treibt ein Dreiganggetriebe 78 an, dessen Abtrieb über eine manuell zu betätigende Bremse 80 zu einem Planetenendantrieb 82 gelangt. Der Planetenendantrieb 82 dient zum Antrieb des Antriebsrads 20, das wiederum das Zugmittel 26 antreibt. Eine Hydraulikleitung 84 ist mittels eines Wechselventils 85 an die Leitungen 73 und 74 angeschlossen. Das Wechselventil 85 führt Flüssigkeit von jeweils einer der Leitungen 73 oder 74, und zwar abhängig davon, in welcher der höhere Druck ansteht, zu der Hydraulikleitung 84.

Von der Hydraulikleitung 84 gelangt die Flüssigkeit zu einer Abzweigleitung 86, die an eine offene Seite 88 des hydraulischen Spannmotors 44 angeschlossen ist. Die Hydraulikleitung 84 führt die Flüssigkeit auch einem Steuerventil 90 zu, das über eine Leitung 92 mit der Kolbenstangenseite 94 des hydraulischen Spannmotors 44 verbunden ist. Ferner ist das Steuerventil 90 durch eine Leitung 98 mit einem Vorratsbehälter 96 verbunden.

Das Steuerventil 90 ist als ein magnetbetätigtes Zweistellungsventil ausgebildet, das in seiner nicht betätigten und in Figur 3 gezeigten Ruhestellung die Kolbenstangenseite 94 des Spannmotors 44 über die Leitungen 92 und 98 mit dem Vorratsbehälter 96 verbindet. Dieser Schaltzustand wird als der Hochspannungszustand bezeichnet, da der gesamte Hydraulikdruck an der offenen Seite 88 des hydraulischen Spannmotors 44 wirkt und an der Kolbenstangenseite 94 der Druck des Vorratsbehälters 96 ansteht. Gemäß diesem Ausführungsbeispiel wird der Hochspannungszustand gewählt, wenn in dem Dreiganggetriebe 78 der erste Gang eingelegt ist.

Wenn die Bedienungsperson mittels eines Schalthebels 100 das Dreiganggetriebe 78 von dem ersten in den zweiten Gang schaltet, wird dabei ein nicht gezeigter Schalter in dem Schalthebel 100 geschlossen und dadurch der Magnet des Steuerventils 90 aktiviert. Dieses Unter-Strom-Setzen des Magneten schaltet das Steuerventil 90 derart, daß die Kolbenstangenseite 94 des Spannmotors 44 durch die Hydraulikleitung 84 und die Leitung 92 von der Druckflüssigkeit beaufschlagt wird. In diesem Schaltzustand wird an beiden Seiten des Kolbens des Spannmotors 44 die gleiche Druckflüssigkeit mit infolgedessen gleichem Druck angelegt; allerdings sind die daraus resultierenden Kräfte nicht gleich groß, weil der Hydraulikdruck auf der Kolbenstangenseite 94 aufgrund der Kolbenstange nicht an die gesamte Kolbenfläche angelegt werden kann. Daraus ergibt sich ein Niederspannungsarbeitszustand in den höheren Gängen.

Figur 4 ist eine graphische Darstellung dieses Spannsystems, aus dem hervorgeht, daß der Hochspannungszustand für den ersten Gang und der Niederspannungszustand für den zweiten und den dritten Gang gewählt wird.

## Patentansprüche

1. Zugmittellaufwerk (18) eines Fahrzeugs (10) mit einem Antriebsrad (20) und zwei Umlenkrädern (22, 24), die von einem endlosen Zugmittel (26) umgeben sind, mittels dessen sich das Fahrzeug (10) über einen Rahmen (30) auf dem Boden abstützt, und mit einem schwenkbar an den Rahmen (30) angeschlossenen Schwenkarm (32, 38) zur drehbaren Aufnahme eines Umlenkrades (22), dadurch gekennzeichnet, daß das zweite Umlenkrad (24) drehbar in einem weiteren schwenkbar an dem Rahmen (30) angebrachten Schwenkarm (38) gelagert ist und daß zwischen beiden Schwenkarmen (32, 38) und dem Rahmen (30) gegen eine Kraft verstellbare und das Zugmittel (26) spannende Aufhängungszylinder (64, 66) vorgesehen sind.

2. Zugmittellaufwerk nach Anspruch 1, dadurch gekennzeichnet, daß zwischen den Umlenkrädern (22, 24) ein weiterer schwenkbar an dem Rahmen (30) angebrachter Schwenkarm (52) mit Zugmittelrollen (46, 48) vorgesehen ist.

3. Zugmittellaufwerk nach Anspruch 1 oder 2, dadurch gekennzeichnet, daß vorzugsweise an einem der ein Umlenkrad (22, 24) tragenden Schwenkarme (32) ein weiterer schwenkbar an diesem Schwenkarm (32) angebrachter Schwenkarm (60) mit wenigstens einer Zugmittelrolle (58) vorgesehen ist.

4. Zugmittellaufwerk nach Anspruch 2 oder 3, dadurch gekennzeichnet, daß zwischen einem oder beiden der weiteren Schwenkarme (52, 60) und dem Rahmen (30) oder einem ein Umlenkrad (22, 24) tragenden Schwenkarm (32, 38) jeweils ein gegen eine Kraft verstellbarer und das Zugmittel (26) spannender bzw. das Fahrzeug (10) auf dem Boden abstützender Aufhängungszylinder (68, 70) vorgesehen ist.

5. Zugmittellaufwerk nach einem oder mehreren der vorherigen Ansprüche, dadurch gekennzeichnet, daß ein oder mehrere der Schwenkarme (32, 38, 52, 60) teleskopartig ausgebildet und mit einem Spannmotor (44) zum Ausfahren des Teleskops versehen sind.

6. Zugmittellaufwerk nach einem oder mehreren der vorherigen Ansprüche, dadurch gekennzeichnet, daß die Aufhängungszylinder (64, 66, 68, 70) von einem Druckmittel beaufschlagt werden und untereinander in Druckmittelverbindung stehen.

7. Zugmittellaufwerk nach einem oder mehreren der vorherigen Ansprüche, dadurch gekennzeichnet, daß in dem Druckmittelsystem zu den Aufhängungszylindern (64, 66, 68, 70) ein das Druckmittel unter Druck setzender Druckspeicher (71) vorgesehen ist.

8. Zugmittellaufwerk nach Anspruch 5, dadurch gekennzeichnet, daß die von dem oder den Spannmotoren (44) aufgebrachte Spannkraft in umgekehrtem Verhältnis zur Fahrtgeschwindigkeit des Fahrzeugs (10) steuer- oder regelbar ist.

9. Zugmittellaufwerk nach Anspruch 5, wobei das Fahrzeug (10) ein Dreiganggetriebe (78) enthält, dadurch gekennzeichnet, daß die Spannkraft des oder der Spannmotoren (44) im Arbeitsbetrieb des Fahrzeugs (10) und insbesondere im ersten Gang höher ist als im Transportbetrieb.

10. Zugmittellaufwerk nach einem oder mehreren der vorherigen Ansprüche, dadurch gekennzeichnet, daß zur Steuerung des Drucks in dem Spannmotor (44) der Spannmotor (44) als hydraulische Kolben-Zylinder-Einheit ausgebildet ist, deren Kolbenstangenseite (94) mit unterschiedlichen Drücken beaufschlagbar ist.
